# EUROPÄISCHE PATENTSCHRIFT

(11) **EP 3 315 954 B1**
(45) Veröffentlichungstag und Bekanntmachung des Hinweises auf die Patenterteilung: **31.07.2024**
(21) Anmeldenummer: 17196829.0
(22) Anmeldetag: 17.10.2017
(51) Int. Cl.: G01N 27/02

(54) **MESSGERÄT ZUR BESTIMMUNG EINER EIGENSCHAFT EINES MEDIUMS**
MEASURING DEVICE FOR DETERMINING A PROPERTY OF A MEDIUM
DISPOSITIF DE MESURE PERMETTANT DE DÉTERMINER UNE PROPRIÉTÉ D'UN MILIEU

(30) Priorität: 01.11.2016 DE 102016120785
(43) Veröffentlichungstag der Anmeldung: 02.05.2018
(73) Patentinhaber: KROHNE Messtechnik GmbH, 47058 Duisburg (DE)
(72) Erfinder: GLASMACHERS, Holger, 44795 Bochum (DE); ANDELIC, Edin, DE / 58095 Hagen (DE); SCHWANER, Andreas, 46519 Alpen (DE)
(74) Vertreter: Gesthuysen Patentanwälte

(56) Entgegenhaltungen:
- EP-A2- 2 287 591
- DE-A1- 102010 029 762
- US-A1- 2005 046 852
- US-A1- 2005 173 638
- US-A1- 2011 074 476
- US-A1- 2014 203 801
- US-A1- 2014 352 396
- ANDRÉ MARIANOVICH: "Integration eines digitalen MEMS-Mikrofons in ein photoakustisches Spektrometer", 25 April 2013 (2013-04-25), XP055462281, Retrieved from the Internet <URL:http://edoc.sub.uni-hamburg.de/haw/volltexte/2014/2258/pdf/BA_AMarianovich.pdf> [retrieved on 20180323]
- MARCUS WOLFF: "Photoacoustic Signal Processing: Lock-In Amplification vs. Goertzel Algorithm", 18TH INTERNATIONAL CONFERENCE ON PHOTOACOUSTIC AND PHOTOTHERMAL PHENOMENA, 1 January 2015 (2015-01-01), XP055685867

## Beschreibung

Die Erfindung betrifft ein Messgerät zur Bestimmung einer Eigenschaft eines Mediums. Das Messgerät weist eine Anregungseinrichtung, eine Messeinrichtung und eine Steuereinrichtung auf, wobei die Steuereinrichtung zur Steuerung sowohl der Anregungseinrichtung als auch der Messeinrichtung ausgebildet ist. Im Betrieb des Messgeräts erzeugt die Anregungseinrichtung zunächst ein Anregungssignal und überträgt das Anregungssignal auf das Medium. Das auf das Medium übertragene Anregungssignal erzeugt in der Messeinrichtung ein Messsignal, wobei die Messeinrichtung das Messsignal dann misst. Weiter bestimmt die Steuereinrichtung eine Amplitude des Anregungssignals und eine Amplitude des gemessenen Messsignals und bestimmt die Eigenschaft des Mediums unter Verwendung der Amplitude des Anregungssignals und der Amplitude des Messsignals. Aus dem Stand der Technik sind unter anderen induktive Leitfähigkeitsmessgeräte und Trübungsmessgeräte als Messgeräte der beschriebenen Art bekannt.

Ein solches induktives Leitfähigkeitsmessgerät misst als die Eigenschaft des Mediums eine elektrische Leitfähigkeit des Mediums. Die Anregungseinrichtung eines induktiven Leitfähigkeitsmessgeräts weist für gewöhnlich eine Anregungsspule zur Übertragung des Anregungssignals auf das Medium und die Messeinrichtung eine Messspule zur Messung des Messsignals auf. Die Steuereinrichtung weist z. B. zur Bestimmung der Amplitude des Anregungssignals und der Amplitude des Messsignals jeweils einen analogen Lock-In-Verstärker auf. Im Allgemeinen ist ein Lock-In-Verstärker ein Verstärker zur Messung eines schwachen Wechselsignals. Zur Messung des Wechselsignals moduliert der Lock-In-Verstärker das Wechselsignal mit einem Referenzwechselsignal mit bekannter Referenzfrequenz und wirkt als schmalbandiger Bandpassfilter, was bedeutet, dass Gleichsignale, Wechselsignale mit von der Referenzfrequenz abweichenden Frequenzen und Rauschen im zu messenden Wechselsignal reduziert werden. Auf diese Weise wird das Signal-Rausch-Verhältnis des Wechselsignals verbessert. Ein Lock-In-Verstärker weist für gewöhnlich einen Signaleingang für das zu messende Wechselsignal, eine Referenzsignalquelle zur Erzeugung des Referenzwechselsignals, einen Phasenschieber, einen Mischer und einen Tiefpassfilter auf. Der Phasenschieber bewirkt, dass das mit dem Referenzwechselsignal modulierte Wechselsignal und das Referenzwechselsignal in Phase sind. Der Multiplizierer mischt dann das Wechselsignal und das Referenzwechselsignal miteinander und der Tiefpassfilter filtert das Ergebnis des Mischens. Das tiefpassgefilterte Ergebnis ist proportional zur Amplitude des ummodulierten Wechselsignals.

Die Anregungseinrichtung eines Trübungsmessgeräts der beschriebenen Art weist für gewöhnlich eine Lichtquelle zur Übertragung des Anregungssignals auf das Medium und die Messeinrichtung einen Lichtsensor zur Messung des Messsignals auf. Auch die Steuereinrichtung eines Trübungsmessgeräts weist zur Bestimmung der Amplitude des Anregungssignals und der Amplitude des Messsignals z. B. jeweils einen analogen Lock-In-Verstärker auf. Insoweit gelten die Ausführungen zum induktiven Leitfähigkeitsmessgerät entsprechend für das Trübungsmessgerät.

Aufgabe der vorliegenden Erfindung ist die Angabe eines Messgeräts zur Bestimmung einer Eigenschaft eines Mediums, bei denen die Genauigkeit der Bestimmung der Eigenschaft des Mediums verbessert ist.

Die gegenwärtige Offenbarung beschreibt ein Verfahren zur Bestimmung einer Eigenschaft eines Mediums, bei dem die aufgezeigte Aufgabe gelöst ist. Das Verfahren ist zunächst im Wesentlichen dadurch gekennzeichnet, dass die Amplitude des Anregungssignals bestimmt wird, indem das Anregungssignal digitalisiert und auf das digitalisierte Anregungssignal ein Lock-In-Verfahren angewendet wird. Weiter ist es dadurch gekennzeichnet, dass die Amplitude des Messsignals bestimmt wird, indem das Messsignal digitalisiert und auf das digitalisierte Messsignal das Lock-In-Verfahren angewendet wird.

Bei aus dem Stand der Technik bekannten Verfahren erfolgen die Bestimmung der Amplitude des Anregungssignals und die Bestimmung der Amplitude des Messsignals durch die Ausführung von Lock-In-Verfahren in der analogen Domäne. Die analoge Domäne ist dadurch gekennzeichnet, dass analoge Signale analog verarbeitet werden. Verarbeiten bedeutet dabei z. B. verstärken, filtern oder mischen. Im Allgemeinen wird bei einem Lock-In-Verfahren, wie auch bei einem Lock-In-Verstärker, zur Messung eines Wechselsignals dieses zunächst mit einem Referenzwechselsignal mit bekannter Referenzfrequenz moduliert. Dann werden das modulierte Wechselsignal und das Referenzwechselsignal in Phase gebracht und anschließend die beiden Signale miteinander gemischt. Schließlich wird das Ergebnis des Mischens tiefpassgefiltert. Das tiefpassgefilterte Ergebnis des Mischens ist proportional zur Amplitude des unmodulierten Wechselsignals. Bei einem digitalen Lock-In-Verfahren werden das Anregungssignal und das Messsignal vor der Ausführung des Lock-In-Verfahrens zunächst digitalisiert und erfolgt das Ausführen des Lock-In-Verfahrens in der digitalen Domäne. Die digitale Domäne ist dadurch gekennzeichnet, dass digitale Signale digital verarbeitet werden. Verarbeiten bedeutet dabei z. B. verstärken, filtern oder mischen. Durch das Ausführen des Lock-In-Verfahrens in der digitalen und nicht in der analogen Domäne wird die Genauigkeit der Bestimmung der Eigenschaft des Mediums im Vergleich zur Ausführung in der analogen Domäne verbessert. Darüber sind die Anforderungen an die die Verfahren ausführenden Einrichtungen reduziert, wodurch auch die Herstellungskosten reduziert sind.

In einer Ausgestaltung des Verfahrens ist vorgesehen, dass bei Ausführung des digitalen Lock-In-Verfahrens ein Goertzel-Algorithmus ausgeführt wird. Dieser Ausgestaltung liegt die Erkenntnis zugrunde, dass ein Lock-In-Verfahren einem Bandpass entspricht und dieser durch einen Goertzel-Algorithmus und anschließender Tiefpassfilterung ausgeführt werden kann. In einer weiteren Ausgestaltung des Verfahrens ist vorgesehen, dass unter Verwendung des digitalisierten Anregungssignals und des digitalisierten Messsignals eine Signalplausibilisierung durchgeführt wird. Vorzugsweise wird eine SIL2-Signalplausibilisierung durchgeführt. Dabei steh SIL für den Ausdruck Safety Integrity Level, welcher aus der internationalen Normung IEC 61508/IEC61511 bekannt ist.

Die Erfindung bezieht sich auf ein Messgerät zur Bestimmung einer Eigenschaft eines Mediums, bei dem die aufgezeigte Aufgabe gelöst ist. Das erfindungsgemäße Messgerät ist zunächst und im Wesentlichen dadurch gekennzeichnet, dass die Steuereinrichtung die Amplitude des Anregungssignals durch Digitalisierung des Anregungssignals und Ausführung eines Lock-In-Verfahrens auf das digitalisierte Anregungssignal bestimmt. Weiter ist das Messgerät dadurch gekennzeichnet, dass die Steuereinrichtung der Amplitude des Messsignals durch Digitalisierung des Messsignals und Ausführung des Lock-In-Verfahrens auf das digitalisierte Medium bestimmt. Beides erfolgt im Betrieb des Messgeräts durch die Steuereinrichtung.

Aus dem Stand der Technik bekannte Messgeräte der vorliegenden Art weisen analoge Lock-In-Verstärker auf. Es ist erkannt worden, dass diese Lock-In-Verstärker aufgrund ihrer analogen Signalverarbeitung Fehler bei der Bestimmung der Eigenschaft des Mediums verursachen und ein erheblicher analoger Schaltungsaufwand notwendig ist, um diese Fehler zu reduzieren. Im Gegensatz dazu erfolgt die Bestimmung der Eigenschaft des Mediums erfindungsgemäß erst nach der Digitalisierung sowohl des Anregungssignals als auch des Messsignals und damit in der digitalen Domäne, wodurch diese Fehler vermieden werden. Somit können die analogen Lock-In-Verstärker entfallen, wodurch die Herstellungskosten reduziert und Genauigkeit der Bestimmung der Eigenschaft des Mediums verbessert werden.

In einer Ausgestaltung des erfindungsgemäßen Messgeräts ist vorgesehen, dass die Steuereinrichtung zur Ausführung eines der beschriebenen Verfahren ausgebildet ist. Das erfindungsgemäße Messgerät ist ein induktives Leitfähigkeitsmessgerät. Dabei weist die Anregungseinrichtung eine Anregungsspule zur Übertragung des Anregungssignals auf das Medium und die Messeinrichtung eine Messspule zur Messung des Messsignals auf. Das Messgerät bestimmt eine elektrische Leitfähigkeit als die Eigenschaft des Mediums unter Verwendung des Verhältnisses der Amplitude des Messsignals zur Amplitude des Anregungssignals. Das Anregungssignal wird dabei als Wirbelstrom durch das Medium von der Anregungs- zur Messspule übertragen.

Ein Verhältnis der Amplitude des Messsignals zur Amplitude des Anregungssignals ist ein Maß für die Leitfähigkeit des Mediums. Die Übertragung des Anregungssignals von der Anregungs- zur Messspule erfolgt dabei zum einen durch das Medium und zum anderen durch eine vom Medium unabhängige magnetische Restkopplung zwischen der Mess- und der Anregungsspule. Diese mediumsunabhängige Restkopplung bewirkt einen Fehler bei der Bestimmung der elektrischen Leitfähigkeit des Mediums, weshalb dieser Fehler zu kompensieren ist.

Aus dem Stand der Technik sind zwei Verfahren zur Kompensation des Fehlers bekannt. Beiden Verfahren gemein ist, dass in einem ersten Verfahrensschritt ein durch die Restkopplung erzeugtes Messsignal bestimmt wird. Das geschieht durch Übertragung des Anregungssignals von der Anregungs- zur Messspule bei Abwesenheit eines Mediums, wodurch gewährleistet ist, dass die Übertragung des Anregungssignals nicht durch das Medium erfolgt. Somit entspricht das auf diese Weise erzeugte Messsignal dem Fehler durch die mediumsunabhängige Restkopplung. Gemäß dem ersten bekannten Verfahren wird das durch die Restkopplung verursachte Messsignal von dem Messsignal subtrahiert, was bei Vorhandensein eines Mediums bestimmt wird. Gemäß dem zweiten bekannten Verfahren wird die Wirkung der Restkopplung über eine Kompensationswicklung mit einem einstellbaren Widerstand kompensiert. Dabei wird der Widerstandswert des einstellbaren Widerstands so lange variiert, bis bei den Messungen mit abwesendem Medium kein Messsignal mehr gemessen wird. Beiden Verfahren ist somit auch gemein, dass die Kompensation nach der jeweiligen Messung und somit nach der Ausführung eines Lock-In-Verfahrens erfolgt. Es ist erkannt worden, dass diese nachträgliche Kompensation zu Fehlern führt. Deshalb ist erfindungsgemäß vorgesehen, dass die Steuereinrichtung eine mediumsunabhängige Restkopplung zwischen der Anregungsspule und der Messspule vor der Ausführung des Lock-In-Verfahrens kompensiert.

In einer nicht erfindungsgemäßen Ausgestaltung des Messgeräts ist vorgesehen, dass es kein induktives Leitfähigkeitsmessgerät, sondern ein Trübungsmessgerät ist. Bei diesem weist die Anregungseinrichtung eine Lichtquelle zur Übertragung des Anregungssignals auf das Medium und die Messeinrichtung einen Lichtsensor zur Messung des Messsignals auf. Das Messgerät bestimmt eine Trübung als die Eigenschaft des Mediums unter Verwendung des Verhältnisses der Amplitude des Messsignals zur Amplitude des Anregungssignals. Dabei wird das Anregungssignal als von der Lichtquelle erzeugtes Licht über das Medium übertragen.

In einer Ausgestaltung des Trübungsmessgeräts ist vorgesehen, dass die Anregungseinrichtung einen weiteren Lichtsensor zur Messung des Anregungssignals aufweist.

In einer weiteren Ausgestaltung des Trübungsmessgeräts ist vorgesehen, dass die Lichtquelle, das Medium und der Lichtsensor derart zueinander angeordnet sind, dass das von der Lichtquelle erzeugte und vom Medium übertragene Anregungssignal direkt auf den Lichtsensor trifft. Dabei wird das Licht im Medium an den das Medium trübenden Bestandteilen des Mediums gestreut, sodass das vom Medium auf den Lichtsensor übertragene Licht ein Maß für die Trübung des Mediums ist.

In einer zur vorstehenden Ausgestaltung alternativen Ausgestaltung des Trübungsmessgeräts ist vorgesehen, dass die Lichtquelle, das Medium und der Lichtsensor derart angeordnet sind, dass das von der Lichtquelle erzeugte Anregungssignal von dem Medium gestreut wird und das gestreute Anregungssignal auf den Lichtsensor trifft. Dabei wird das Licht im Medium an den das Medium trübenden Bestandteilen des Mediums gestreut, sodass das vom Medium auf den Lichtsensor übertragene gestreute Licht ein Maß für die Trübung des Mediums ist.

Die Ausführungen zur ersten Lehre gelten entsprechend auch für die zweite Lehre und umgekehrt. Im Einzelnen ist eine Vielzahl von Möglichkeiten gegeben, das erfindungsgemäße Messgerät zur Bestimmung einer Eigenschaft des Mediums auszugestalten und weiterzubilden. Dazu wird verwiesen auf die nachfolgende Beschreibung von bevorzugten Ausführungsbeispielen in Verbindung mit der Zeichnung. In der Zeichnung zeigt schematisch und abstrahiert
- Fig. 1: ein erstes Ausführungsbeispiel eines Messgeräts zur Bestimmung einer Eigenschaft eines Mediums,
- Fig. 2: ein zweites Ausführungsbeispiel eines solchen Messgeräts und
- Fig. 3: ein drittes Ausführungsbeispiel eines solchen Messgeräts.

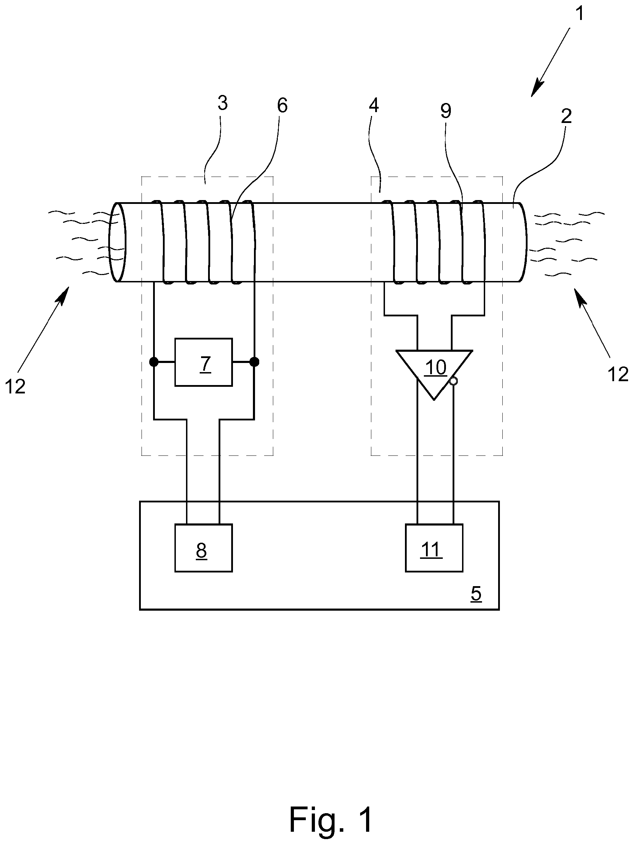

Fig. 1 zeigt ein erstes Ausführungsbeispiel eines Messgeräts 1, wobei es sich bei dem Messgerät um ein induktives Leitfähigkeitsmessgerät handelt. Das Messgerät weist ein Messrohr 2, eine Anregungseinrichtung 3, eine Messeinrichtung 4 und eine Steuereinrichtung 5 auf. Die Anregungseinrichtung 3 weist eine Anregungsspule 6 und eine Anregungsquelle 7 auf, wobei ein erster Analog-Digital-Umsetzer 8 zur Steuereinrichtung 5 gehört. Die Messeinrichtung 4 weist eine Messspule 9 und einen Verstärker 10 auf, wobei ein zweiter Analog-Digital-Umsetzer 11 zur Steuereinrichtung 5 gehört.

Im Betrieb des Messgeräts 1 ist ein Medium 12 im Messrohr 2, wobei eine elektrische Leitfähigkeit als eine Eigenschaft des Mediums 12 durch das Messgerät 1 bestimmt wird. Dazu erzeugt die Anregungseinrichtung 3 mit der Anregungsquelle 7 ein Anregungssignal und überträgt dieses mit der Anregungsspule 6 auf das Medium 12. Das auf das Medium 12 übertragene Anregungssignal erzeugt durch Induktion in der Messspule 9 der Messeinrichtung 4 ein Messsignal, das von der Messeinrichtung 4 gemessen und mit dem Verstärker 10 verstärkt wird. Die Übertragung des Anregungssignals von der Anregungsspule 6 zur Messspule 9 erfolgt dabei durch Wirbelströme im Medium 12.

Sowohl das Anregungssignal als auch das verstärkte Messsignal sind der Steuereinrichtung 5 zugeführt. Die Steuereinrichtung 5 bestimmt zunächst eine Amplitude des zugeführten Anregungssignals und eine Amplitude des zugeführten Messsignals. Dazu digitalisiert die Steuereinrichtung 5 das Anregungssignal mit dem ersten Analog-Digital-Umsetzer 8 und das Messsignal mit dem zweiten Analog-Digital-Umsetzer 11. Die Verstärkung des Messsignals durch den Verstärker 10 ist ist derart eingestellt, dass ein Eingangssignalbereich des zweiten Analog-Digital-Umsetzers 11 ausgeschöpft wird. Weiter bestimmt die Steuereinrichtung 5 durch Ausführung eines Lock-In-Verfahrens auf das digitalisierte Anregungssignal die Amplitude des Anregungssignals und durch Ausführung des Lock-In-Verfahrens auf das digitalisierte Messsignal die Amplitude des Messsignals. Bei der Ausführung des Lock-In-Verfahrens wird von der Steuereinrichtung 5 auch ein Goertzel-Algorithmus ausgeführt. Unter Verwendung des Verhältnisses der Amplitude des Messsignals zur Amplitude des Anregungssignals wird dann die Leitfähigkeit des Mediums 12 bestimmt.

Weiter führt die Steuereinrichtung 5 unter Verwendung des digitalisierten Anregungssignals und des digitalisierten Messsignals eine SIL2-Signalplausibilisierung durch. Darüber hinaus kompensiert die Steuereinrichtung 5 eine mediumsunabhängige Restkopplung zwischen der Anregungsspule und der Messspule vor der Ausführung des Lock-In-Verfahrens.

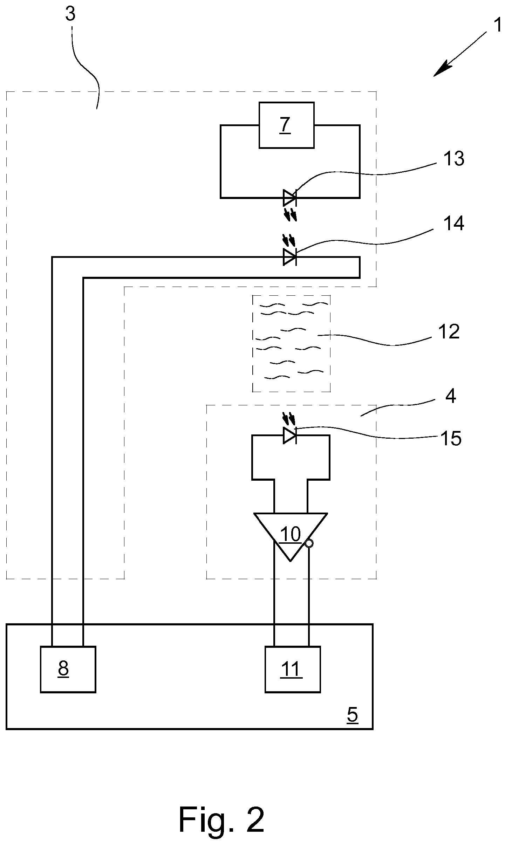

Fig. 2 zeigt ein zweites nicht erfindungsgemäßes Ausführungsbeispiel eines Messgeräts, bei dem es sich um ein erstes Trübungsmessgerät handelt. Das Messgerät 1 weist eine Anregungseinrichtung 3, eine Messeinrichtung 4 und eine Steuereinrichtung 5 auf. Die Anregungseinrichtung 3 weist eine Lichtquelle 13, eine Anregungsquelle 7 und einen Anregungslichtsensor 14 auf. Die Messeinrichtung 4 weist einen Lichtsensor 15 und einen Verstärker 16 auf. Die Steuereinrichtung 5 weist einen ersten Analog-Digital-Umsetzer 8 und einen zweiten Analog-Digital-Umsetzer 11 auf.

Im Betrieb des Messgeräts 1 wird eine Trübung als eine Eigenschaft eines Mediums 12 durch das Messgerät 1 bestimmt. Dazu erzeugt die Anregungseinrichtung 3 mit der Anregungsquelle 7 ein Anregungssignal und überträgt das Anregungssignal durch die Lichtquelle 13 auf das Medium 12. Das auf das Medium 12 übertragene Anregungssignal erzeugt in dem Lichtsensor 15 ein Messsignal, das von der Messeinrichtung 4 gemessen und mit dem Verstärker 10 verstärkt wird. Die Übertragung des Anregungssignals von der Lichtquelle 13 zum Lichtsensor 15 erfolgt durch Licht im Medium 12. Dabei sind die Lichtquelle 13, das Medium 12 und der Lichtsensor 15 derart zueinander angeordnet, dass das von der Lichtquelle 13 erzeugte und vom Medium 12 übertragene Anregungssignal direkt auf den Lichtsensor 15 trifft. Das Licht wird im Medium 12 an den das Medium 12 trübenden Bestandteilen des Mediums 12 gestreut, sodass das vom Medium 12 auf den Lichtsensor 15 übertragene Licht ein Maß für die Trübung des Mediums 12 ist. Das Anregungssignal wird von der Anregungseinrichtung 3 mit dem Anregungslichtsensor 14 gemessen.

Sowohl das gemessene Anregungssignal als auch das verstärkte gemessene Messsignal sind der Steuereinrichtung 5 zugeführt. Die Steuereinrichtung 5 bestimmt zunächst eine Amplitude des zugeführten Anregungssignals und eine Amplitude des zugeführten Messsignals. Dazu digitalisiert die Steuereinrichtung 5 das Anregungssignal mit dem ersten Analog-Digital-Umsetzer 8 und das Messsignal mit dem zweiten Analog-Digital-Umsetzer 11. Die Verstärkung des Messsignals durch den Verstärker 10 ist derart eingestellt, dass ein Eingangssignalbereich des zweiten Analog-Digital-Umsetzers 11 ausgeschöpft wird. Weiter bestimmt die Steuereinrichtung 5 durch Ausführung eines Lock-In-Verfahrens auf das digitalisierte Anregungssignal die Amplitude des Anregungssignals und durch Ausführung des Lock-In-Verfahrens auf das digitalisierte Messsignal die Amplitude des Messsignals. Bei der Ausführung des Lock-In-Verfahrens wird von der Steuereinrichtung 5 auch ein Goertzel-Algorithmus ausgeführt. Unter Verwendung des Verhältnisses der Amplitude des Messsignals zur Amplitude des Anregungssignals wird dann die Trübung des Mediums 12 bestimmt. Weiter führt die Steuereinrichtung 5 unter Verwendung des digitalisierten Anregungssignals und des digitalisierten Messsignals eine SIL2-Signalplausibilisierung durch.

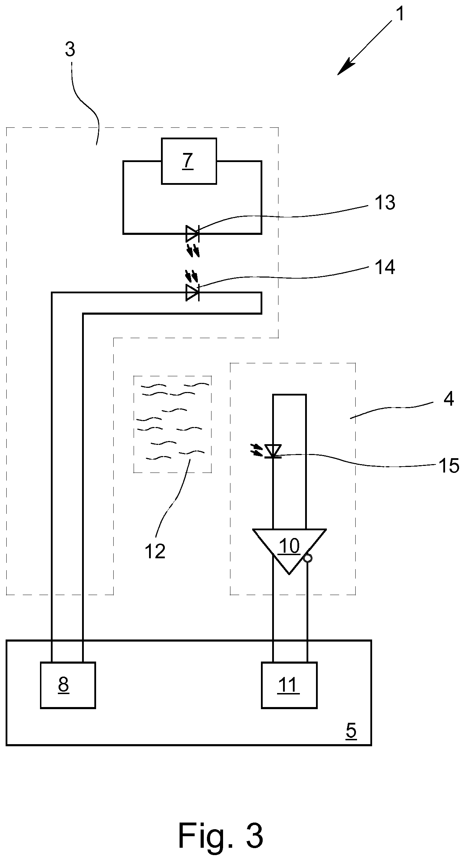

Fig. 3 zeigt ein drittes nicht erfindungsgemäßes Ausführungsbeispiel eines Messgeräts, bei dem es sich um ein zweites Trübungsmessgerät handelt. Das Messgerät 1 weist eine Anregungseinrichtung 3, eine Messeinrichtung 4 und eine Steuereinrichtung 5 auf. Die Anregungseinrichtung 3 weist eine Lichtquelle 13, eine Anregungsquelle 7 und einen Anregungslichtsensor 14 auf. Die Messeinrichtung 4 weist einen Lichtsensor 15 und einen Verstärker 16 auf. Die Steuereinrichtung 5 weist einen ersten Analog-Digital-Umsetzer 8 und einen zweiten Analog-Digital-Umsetzer 11 auf.

Im Betrieb des Messgeräts 1 wird eine Trübung als eine Eigenschaft eines Mediums 12 durch das Messgerät 1 bestimmt. Dazu erzeugt die Anregungseinrichtung 3 mit der Anregungsquelle 7 ein Anregungssignal und überträgt das Anregungssignal durch die Lichtquelle 13 auf das Medium 12. Das auf das Medium 12 übertragene Anregungssignal erzeugt in dem Lichtsensor 15 ein Messsignal, das von der Messeinrichtung 4 gemessen und mit dem Verstärker 10 verstärkt wird. Die Übertragung des Anregungssignals von der Lichtquelle 13 zum Lichtsensor 15 erfolgt durch Licht im Medium 12. Dabei sind die Lichtquelle 13, das Medium 12 und der Lichtsensor 15 derart zueinander angeordnet, dass das von der Lichtquelle 13 erzeugte Anregungssignal indirekt auf den Lichtsensor 15 trifft. Das Licht wird dabei im Medium 12 an den das Medium 12 trübenden Bestandteilen des Mediums 12 gestreut und das gestreute Licht trifft dann auf den Lichtsensor 15, wobei das gestreute Licht ein Maß für die Trübung des Mediums 12 ist. Das Anregungssignal wird von der Anregungseinrichtung 3 mit dem Anregungslichtsensor 14 gemessen.

Sowohl das gemessene Anregungssignal als auch das verstärkte gemessene Messsignal sind der Steuereinrichtung 5 zugeführt. Die Steuereinrichtung 5 bestimmt zunächst eine Amplitude des zugeführten Anregungssignals und eine Amplitude des zugeführten Messsignals. Dazu digitalisiert die Steuereinrichtung 5 das Anregungssignal mit dem ersten Analog-Digital-Umsetzer 8 und das Messsignal mit dem zweiten Analog-Digital-Umsetzer 11. Die Verstärkung des Messsignals durch den Verstärker 10 ist derart eingestellt, dass ein Eingangssignalbereich des zweiten Analog-Digital-Umsetzers 11 ausgeschöpft wird. Weiter bestimmt die Steuereinrichtung 5 durch Ausführung eines Lock-In-Verfahrens auf das digitalisierte Anregungssignal die Amplitude des Anregungssignals und durch Ausführung des Lock-In-Verfahrens auf das digitalisierte Messsignal die Amplitude des Messsignals. Unter Verwendung des Verhältnisses der Amplitude des Messsignals zur Amplitude des Anregungssignals wird dann die Trübung des Mediums 12 bestimmt.

### Bezugszeichen

- 1: Messgerät
- 2: Messrohr
- 3: Anregungseinrichtung
- 4: Messeinrichtung
- 5: Steuereinrichtung
- 6: Anregungsspule
- 7: Anregungsquelle
- 8: Erster Analog-Digital-Umsetzer
- 9: Messspule
- 10: Verstärker
- 11: Zweiter Analog-Digital-Umsetzer
- 12: Medium
- 13: Lichtquelle
- 14: Anregungslichtsensor
- 15: Lichtsensor

## Patentansprüche

1. Messgerät (1) zur Bestimmung einer Eigenschaft eines Mediums (12) mit einer Anregungseinrichtung (3), einer Messeinrichtung (4) und einer Steuereinrichtung (5),
wobei im Betrieb des Messgeräts (1) die Anregungseinrichtung (3) ein Anregungssignal erzeugt und das Anregungssignal auf das Medium (12) überträgt, das auf das Medium (12) übertragene Anregungssignal in der Messeinrichtung (4) ein Messsignal erzeugt und die Messeinrichtung (4) das Messsignal misst, die Steuereinrichtung (5) dazu eingerichtet ist, eine Amplitude des Anregungssignals durch Digitalisierung des Anregungssignals und Ausführung eines Lock-In-Verfahrens auf das digitalisierte Anregungssignal zu bestimmen, eine Amplitude des Messsignals durch Digitalisierung des Messsignals und Ausführung des Lock-In-Verfahrens auf das digitalisierte Messsignal zu bestimmen und die Eigenschaft des Mediums (12) unter Verwendung der Amplitude des Anregungssignals und der Amplitude des Messsignals zu bestimmen,
wobei das Messgerät (1) ein induktives Leitfähigkeitsmessgerät ist, die Anregungseinrichtung (3) eine Anregungsspule (6) zur Übertragung des Anregungssignals auf das Medium (12) und die Messeinrichtung (4) eine Messspule (9) zur Messung des Messsignals aufweist und eine elektrische Leitfähigkeit die Eigenschaft des Mediums (12) ist, und wobei die Steuereinrichtung (5) weiter dazu eingerichtet ist, eine mediumsunabhängige Restkopplung zwischen der Anregungsspule (6) und der Messspule (9) vor der Ausführung des Lock-In-Verfahrens zu kompensieren.

2. Messgerät (1) nach Anspruch 1, **dadurch gekennzeichnet, dass** die Steuereinrichtung (5) zur Ausführung eines Verfahrens zur Bestimmung einer Eigenschaft des Mediums (12) mit den folgenden Schritten ausgebildet ist:
- Erzeugen eines Anregungssignals und Übertragen auf das Medium (12),
- Erzeugen eines Messsignal von dem auf das Medium (12) übertragenen Anregungssignal und Messen des Messsignals,
- Bestimmen einer Amplitude des Anregungssignals, indem das Anregungssignal digitalisiert und auf das digitalisierte Anregungssignal ein Lock-In-Verfahren angewendet wird,
- Bestimmen einer Amplitude des Messsignals, indem das Messsignal digitalisiert und auf das digitalisierte Messsignal das Lock-In-Verfahren angewendet wird,
- Bestimmen der Eigenschaft des Mediums (12) unter Verwendung der Amplitude des Anregungssignals und der Amplitude des Messsignals und
- Durchführen einer Signalplausibilisierung unter Verwendung des digitalisierten Anregungssignals und des digitalisierten Messsignals.

## Claims

1. Measuring device (1) for determining a property of a medium (12) with an excitation device (3), a measuring device (4) and a control device (5), wherein, during operation of the measuring device (1), the excitation device (3) generates an excitation signal and transmits the excitation signal to the medium (12), the excitation signal transmitted to the medium (12) generates a measuring signal in the measuring device (4) and the measuring device (4) measures the measuring signal, the control device (5) is set up for determining an amplitude of the excitation signal by digitizing the excitation signal and performing a lock-in method on the digitized measuring signal, and determining the property of the medium (12) using the amplitude of the excitation signal and the amplitude of the measuring signal,
wherein the measuring device (1) is an inductive conductivity meter, the excitation device (3) has an excitation coil (6) for transmitting the excitation signal to the medium (12) and the measuring device (4) has a measuring coil (9) for measuring the measuring signal, and an electrical conductivity is the property of the medium (12), and
wherein the control device (5) is further set up to compensate for a medium-independent residual coupling between the excitation coil (6) and the measuring coil (9) before performing the lock-in method.

2. Measuring device (1) according to claim 1, **characterized in that** the control device (5) is designed to perform a method for determining a property of the medium (12) comprising the following steps:
- generating an excitation signal and transmitting it to the medium (12),
- generating a measuring signal from the excitation signal transmitted to the medium (12) and measuring the measuring signal,
- determining an amplitude of the excitation signal by digitizing the excitation signal and applying a lock-in method to the digitized excitation signal,
- determining an amplitude of the measuring signal by digitizing the measuring signal and applying the lock-in method to the digitized measuring signal,
- determining the property of the medium (12) using the amplitude of the excitation signal and the amplitude of the measuring signal, and
- performing a signal plausibility check using the digitized excitation signal and the digitized measuring signal.

## Revendications

1. Appareil de mesure (1) destiné à déterminer une propriété d'un milieu (12), ledit appareil de mesure comprenant un module d'excitation (3), un module de mesure (4) et un module de commande (5),
pendant le fonctionnement du module de mesure (1), le module d'excitation (3) générant un signal d'excitation et transmettant le signal d'excitation au milieu (12), le signal d'excitation transmis au milieu (12) générant un signal de mesure dans le module de mesure (4) et le module de mesure (4) mesurant le signal de mesure, le module de commande (5) étant conçu pour déterminer une amplitude du signal d'excitation en numérisant le signal d'excitation et en exécutant un processus de verrouillage sur le signal d'excitation numérisé, déterminer une amplitude du signal de mesure en numérisant le signal de mesure et en exécutant le procédé de verrouillage sur le signal de mesure numérisé et pour déterminer la propriété du milieu (12) à l'aide de l'amplitude du signal d'excitation et de l'amplitude du signal de mesure,
l'appareil de mesure (1) étant un appareil de mesure de conductivité par induction, le module d'excitation (3) comportant une bobine d'excitation (6) destinée à transmettre le signal d'excitation au milieu (12) et le module de mesure (4) comportant une bobine de mesure (9) destinée à mesurer le signal de mesure et une conductivité électrique étant la propriété du milieu (12), et le module de commande (5) étant en outre conçu pour compenser un couplage résiduel, indépendant du milieu, entre la bobine d'excitation (6) et la bobine de mesure (9) avant de mettre en oeuvre le procédé de verrouillage.

2. Appareil de mesure (1) selon la revendication 1, **caractérisé en ce que** le module de commande (5) est conçu pour mettre en oeuvre un procédé de détermination d'une propriété du milieu (12), ledit procédé comprenant les étapes suivantes :
- générer un signal d'excitation et le transmettre au milieu (12),
- générer un signal de mesure à partir du signal d'excitation transmis au milieu (12) et mesurer le signal de mesure,
- déterminer une amplitude du signal d'excitation par numérisation du signal d'excitation et application d'un procédé de verrouillage au signal d'excitation numérisé,
- déterminer une amplitude du signal de mesure par numérisation du signal de mesure et application du procédé de verrouillage au signal de mesure numérisé,
- déterminer la propriété du milieu (12) à l'aide de l'amplitude du signal d'excitation et de l'amplitude du signal de mesure et
- effectuer un contrôle de plausibilité de signal à l'aide du signal d'excitation numérisé et du signal de mesure numérisé.
